(19) Europäisches Patentamt
European Patent Office
Office européen des brevets

(11) Veröffentlichungsnummer: **0 015 522**
**B1**

(12) **EUROPÄISCHE PATENTSCHRIFT**

(45) Veröffentlichungstag der Patentschrift: **29.12.82**

(51) Int. Cl.³: **C 01 B 3/04,** B 01 J 31/16, B 01 J 19/08

(21) Anmeldenummer: **80101034.9**

(22) Anmeldetag: **03.03.80**

(54) **Verfahren zur photochemischen Erzeugung von Wasserstoff aus Wasser.**

(30) Priorität: **06.03.79 DE 2908633**

(43) Veröffentlichungstag der Anmeldung:
**17.09.80 Patentblatt 80/19**

(45) Bekanntmachung des Hinweises auf die Patenterteilung:
**29.12.82 Patentblatt 82/52**

(84) Benannte Vertragsstaaten:
**AT BE CH DE FR GB IT LU NL SE**

(56) Entgegenhaltungen:
**FR-A-1 320 995**
**FR-A-2 387 187**
**FR-A-2 432 475**
**US-A-4 105 517**
**US-A-4 169 030**

**Die Akte enthält technische Angaben, die nach dem Eingang der Anmeldung eingereicht wurden und die nicht in dieser Patentschrift enthalten sind.**

(73) Patentinhaber: **Studiengesellschaft Kohle mbH, Kaiser-Wilhelm-Platz 1, D-4330 Mülheim/Ruhr (DE)**

(72) Erfinder: **Kisch, Horst, Dr., Bismarckstrasse 43, D-4300 Mülheim/ruhr (DE)**

(74) Vertreter: **von Kreisler, Alek, Dipl.-Chem. et al, Deichmannhaus am Hauptbahnhof, D-5000 Köln 1 (DE)**

**EP 0 015 522 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur photochemischen Erzeugung von Wasserstoff aus Wasser

Das erfindungsgemäße Verfahren betrifft die Erzeugung von Wasserstoff durch photochemische, katalytische Spaltung von Wasser mittels Metallkatalysatoren.

In der Literatur sind die folgenden Beispiele nicht enzymatischer, homogener, metallkatalysierter Photolysen von Wasser bekannt. J.-M. Lehn und J.-P. Sauvage (Nouv. J. Chim. 1 [1977], 449) beschreiben ein Vierkomponentensystem, bestehend aus Tris (α,α'-Dipyridyl)Ruthenium(II)dichlorid, dem milden Reduktionsmittel Triäthanolamin, einem »Rhodiumbipyridylkomplex« und $K_2PtCl_6$. Dieses System produziert beim Belichten in wäßriger Lösung maximal 4 ml $H_2$ in 1,5 Stunden.

H. Kagan et al. (Nouv. J. Chim. 2 [1978], 547) verwenden ein geringfügig modifiziertes System: Tris(α,α'-Dipyridyl)Ruthenium(II)dichlorid, Äthylendiamintetraessigsäure, Methylviologen und kolloidales Platin oder Gold. Sie erhalten maximal 10 ml $H_2$ in etwa 10 Stunden.

J. Kiwi und M. Grätzel publizierten gleichzeitig (Helv. Chim. Acta 61 [1978], 2720) mit Kagan ein fast identisches System, in dem lediglich $PtO_2$ (Adamskatalysator) an die Stelle von Platin bzw. Gold im Kagan'schen Katalysatorsystem getreten ist. Diese Autoren erhalten 0,4 ml $H_2$ in 0,5 Stunden.

In der FR-A-2 387 187 ist ein weiteres Verfahren zur Pyrolyse von Wasser angegeben.

Überraschenderweise wurde nun gefunden, daß man mit schwefelhaltigen Metallkomplexen als Katalysatoren, Wasserstoff in bisher nicht erreichter Menge photochemisch aus Wasser erzeugen kann.

Die Katalysatoren sind Komplexverbindungen der nachstehend angegebenen allgemeinen Formeln, die aus organischen Schwefelverbindungen und Metallsalzen von Metallen der I., II., IV., V., VI., VII. und VIII. Nebengruppe des Periodensystems sowie Magnesium gebildet werden, wobei organische Schwefelverbindungen von Metallen wie Titan, Vanadium, Chrom, Molybdän, Wolfram, Mangan, Rhenium, Eisen, Osmium, Kobalt, Nickel, Palladium, Platin, Kupfer, Gold, Zink, Cadmium und Magnesium besonders geeignete Katalysatoren sind. die Katalysatoren der Erfindung sind Metalldithiolene des Typs 1 (G. N. Schrauzer, Adv. Chem. Ser. 110 [1972], 73; J. A. McCleverty, Progr. Inorg. Chem. 10 [1968], 49; E. Hoyer et al., Phosphor. and Sulf. 7 [1979] 49), Metalldithiooxamide vom Typ 2 (P. Ray und R. M. Ray, Quarterly Journ. Indian Chem. Soc. 3, 118; Chem. Zentralblatt [1926] II, 2158) sowie Metalldithiocarbamate, Typ 3 (B. B. Kaul und K. B. Pandeya, J. Inorg. Nucl. Chem. 40 [1978], 229) der folgenden allgemeinen Formeln:

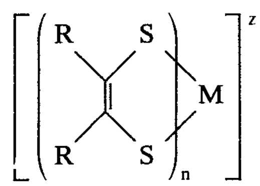 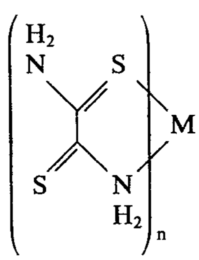 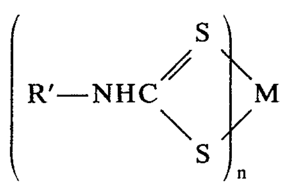

1 2 3

in denen M ein Metall der I., II., IV., V., VI., VII. und VIII. Nebengruppe des Periodensystems sowie Magnesium ist, R = Wasserstoff, eine Alkyl-, Trifluormethyl-, Aryl-, Thioalkyl-, Thioaryl-, Trithiocarbonatgruppe oder CN sein kann, R' = Wasserstoff, eine Alkyl-, Trifluormethyl-, Aryl-, Thioalkyl-, Thioaryl- oder Trithiocarbonatgruppe sein kann, n = 2 oder 3 und z = 0, −1 oder −2 sind, und in denen die Komplexliganden über Schwefelatome oder über Schwefel- und Stickstoffatome an das Metall gebunden sind, oder

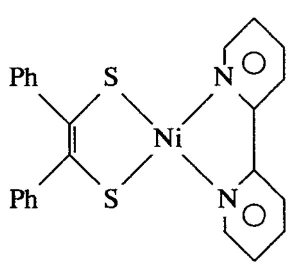

einsetzt.

Das Verfahren wird vorzugsweise in einem Lösungsmittel durchgeführt. Neben Wasser eignen sich hierzu vor allem Mischungen von Wasser mit einem organischen Lösungsmittel wie Tetrahydrofuran (THF), Dihydrofuran, bevorzugt 2,5-Dihydrofuran, oder Methylenchlorid.

Als Lichtquelle kann ein Hochdruck-Quecksilberdampfstrahler (z. B. Philips HPK 125 W) oder eine andere Lampe verwendet werden, welche Licht der Wellenlänge $\lambda \geq 254$ nm emittiert, also auch Sonnenlicht.

Das Verfahren wird zweckmäßigerweise bei Raumtemperatur durchgeführt, aber auch höhere Temperaturen, insbesondere die Siedetemperatur des jeweiligen Lösungsmittels fördern die Reaktionsgeschwindigkeit des erfindungsgemäßen Verfahrens.

Die Geschwindigkeit der Wasserstoffentwicklung (Umsatzzahl) ist abhängig vom Katalysatortyp, der Natur des Liganden R und der Art des Zentralmetalls. Dithiolen- und Dithiooxamidkomplexe von Eisen und Nickel besitzen größere katalytische Aktivität als Cobalt- oder Palladiumverbindungen. Besonders hervorzuheben ist, daß auch Magnesium als Zentralmetall beträchtliche katalytische Wirksamkeit hat. Die maximalen Umsatzzahlen betragen bis zu einigen tausend Mol $H_2$/Mol Katalysator, die Mengen an erzeugtem Wasserstoff um einige Liter.

Das erfindungsgemäße Verfahren ermöglicht erstmalig die katalytische, photochemische Erzeugung größerer Mengen von Wasserstoff aus Wasser mittels einfacher Metallkatalysatoren. Wasserstoff ist bekanntermaßen als Energieträger anstelle von Mineralölen oder fossilen Brennstoffen oder in weiten Bereichen als Reduktionsmittel bei chemischen Prozessen verwendbar.

Die folgenden aufgeführten Beispiele erläutern das allgemeine Prinzip der Erfindung:

## Beispiele 1—13

Die metallkatalysierte, photochemische Erzeugung von Wasserstoff aus Wasser erfolgt durch Einsatz folgender Metallkatalysatoren:

1 Diethylammonium-tris(tolyl-3,4-dithiolato)titanat(2-)
2 Tris(cis-stilben-1,2-dithiolato)molybdän
3 Tetrabutylammonium-tris[(cis-1,2-dicyanoethylen-1,2-dithiolato)-S,S]wolframat(2-)
4 Bis(cis-stilben-1,2-dithiolato)eisen
5 Bis(cis-stilben-1,2-dithiolato)nickel
6 Tetrabutylammonium-bis(cis-stilben-1,2-dithiolato)niccolat(1-)
7 Bis(cis-2-Buten-2,3-dithiolato)nickel
8 Tetrabutylammonium-bis(ethylen-cis-1,2-dithiolato)niccolat(1-)
9 tetrabutylammonium-bis[(cis-1,2-dicyanoethylen-1,2-dithiolato)-S,S]niccolat(2-)
10 Tris(dithiooxamido)dinickel
11 (2,2'-Bipyridin) (cis-Stilben-1,2-dithiolato)nickel
12 Bis(cis-stilben-1,2-dithiolato)platin
13 Tetrabutylammonium-bis[(cis-1,2-dicyanoethylen-1,2-dithiolato)-S,S]zincat(2-)

Die systematischen Zeichnungen für diese Komplexe 1—13 sind:

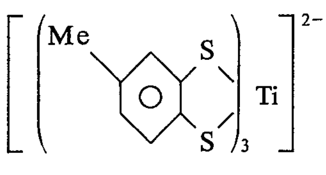

1

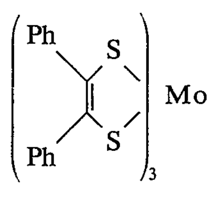

2

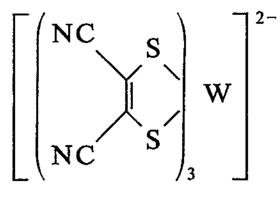

3

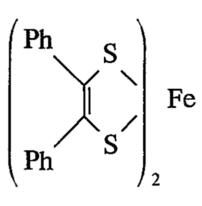

4

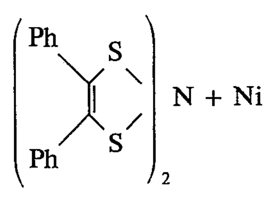

5

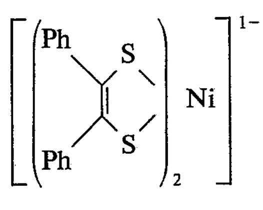

6

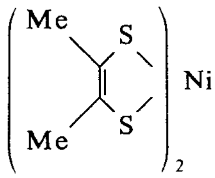

7

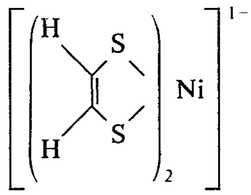

8

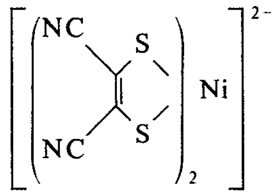

9

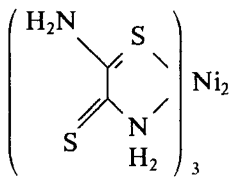

10

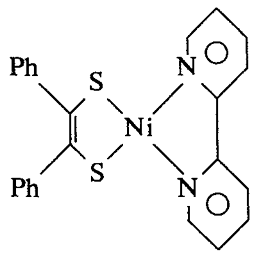

11

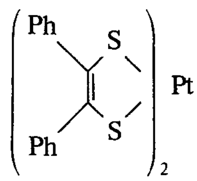

12

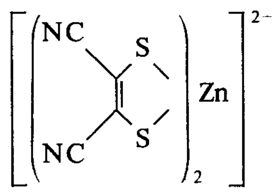

13

In einer Tauchlampenapparatur mit Quarzinnenschacht, in den eine Lampe: Philips HPK 125 Watt eingeführt wurde, wurden die in der folgenden Tabelle aufgeführten mMole des Metallkatalysators in 150 ml THF/Wasser, Mischungsverhältnis 2 : 1, als Lösungsmittel 20 Stunden belichtet. Dabei entwickelte sich, wie aus der Tabelle ersichtlich, eine bestimmte Menge an Millimolen Wasserstoff, aus denen sich die in der letzten Spalte aufgeführten Umsatzzahlen errechnen lassen.

| Katalysator Nr. | Komplextyp mMol | M, R, n, z | mMol $H_2$ | Umsatzzahl (mMol $H_2$/mMol Katalysator/h) |
|---|---|---|---|---|
| 1 | 1, 0,08 | Ti, m-$CH_3C_6H_6$, 3,–2 | 2,6 | 1,9 |
| 2 | 1, 0,021 | Mo, Ph, 3,0 | 1,81 | 4,3 |
| 3 | 1, 0,089 | W, CN, 3,–2 | 3,47 | 1,9 |
| 4 | 1, 0,023 | Fe, Ph, 2,0 | 2,15 | 4,7 |
| 5 | 1, 0,021 | Ni, Ph, 2,0 | 1,18 | 2,8 |
| 6 | 1, 0,022 | Ni, Ph, 2,–1 | 1,36 | 3,1 |
| 7 | 1, 0,022 | Ni, Me, 2,0 | 2,52 | 5,7 |
| 8 | 1, 0,022 | Ni, H, 2,–1 | 2,72 | 6,3 |
| 9 | 1, 0,021 | Ni, CN, 2,–2 | 2,13 | 5,1 |
| 10 | 2, 0,02 | Ni | 2,96 | 7,4 |
| 11 | 1, 0,085 | Ni | 1,48 | 0,9 |
| 12 | 1, 0,02 | Pt, Ph, 2,0 | 1,87 | 4,7 |
| 13 | 1, 0,12 | Zn, CN, 2,–2 | 11,1 | 4,6 |

## Beispiel 14

99 mg (0,12 mMol) des Bis-(tetrabutylammonium)-Zinkdithiolens vom Typ 1 (R=CN, n=2, z=–2) werden in THF/$D_2O$=1 : 1 (Volumenverhältnis) gelöst und in eine Tauchlampenapparatur (Lampe: Philips HPK 125 W) aus Solidexglas® gefüllt. Die Lösung wird 30 Minuten mit Argon gespült und dann 96 Stunden lang belichtet. Es entstehen 150 ml (6,7 mMol) Wasserstoff (Umsatzzahl in Mol $H_2$/Mol Katalysator=56). Massenspektrographische Gasanalyse ergibt ein Verhältnis von $D_2$ : HD : $H_2$=10 : 1 : 0.

## Beispiel 15

Wie Beispiel 14, jedoch werden 55 mg (0,09 mMol) des Bis-(tetramethylammonium)-Zinkdithiolens vom Typ 1 (R–R=$SCS_2$, n=2, z=–2) und 2,5-Dihydrofuran/$H_2O$=1/1 verwendet. In 24 Stunden entstehen 515 ml Wasserstoff (Umsatzzahl=225).

## Beispiel 16

Wie Beispiel 14, jedoch wird die Belichtung in einer Tauchlampenapparatur mit Quarzinnenschacht durchgeführt. In 12 Stunden entstehen 170 ml Wasserstoff; $D_2$ : HD : $H_2$=6 : 1 : 0.

## Beispiel 17

Wie Beispiel 16, jedoch werden 50 mg (0,06 mMol) des Zinkdithiolens und 2,5-Dihydrofuran/$D_2O$=1/1 verwendet. In 24 Stunden entstehen 2,153 Liter Wasserstoff (Umsatzzahl=1600); $D_2$ : HD : $H_2$=3,6 : 1 : 0,14.

Beispiel 18

Wie Beispiel 16, jedoch THF/$H_2O$ = 2 : 1; 12,5 mg (0,023 mMol) Eisendithiolen vom Typ 1 (R = Ph, 2,0); in 67 Stunden erhält man 100,5 ml (4,48 mMol) Wasserstoff (Umsatzzahl = 195).

Beispiel 19

Wie Beispiel 16,1 g (1,8 mMol) Nickeldithiolen vom Typ 1 (R = Ph, 2,0); in 66 Stunden 425 ml (18,97 mMol) Wasserstoff (Umsatzzahl = 10).

Beispiel 20

32 mg (0,0386 mMol) von $(Bu_4N)_2[C_2S_2(CN)_2]_2ZN$ (14) werden in einem Gemisch aus 40 ml THF und 20 ml Wasser gelöst und in einem Quarzreagenzglas mit Gummidichtung und Schraubverschluß zehn Tage dem Tageslicht ausgesetzt (Mülheim-Ruhr, 5.—15. Febr. 1979). Gaschromatographische $H_2$-Bestimmung ergab 0,02 ml Wasserstoff.

Beispiel 21

950 mg (5,1 mMol) von Dinatrium-cis-1,2-dicyanoethylen-1,2-dithiolat (G. Bähr und G. Schleitzer, Chem. Ber. 90 [1957] 438) werden in 10 ml armen MeOH/$H_2O$ = 1/1 gelöst und tropfenweise mit 0,5 g wasserfreiem $MgCl_2$, gelöst in 5 ml MeOH/$H_2O$ = 1/1, versetzt. Die Lösung wurde filtriert und bei Raumtemperatur mit 1,1 g (2,9 mMol) Tetrabutylammoniumjodid versetzt. Stehen lassen über Nacht ergibt orange gefärbte Kristalle: $F_p$ = 103—104° C Anal. Gef. (Ber.): C 60,86 (60,91), H 9,06 (9,23), N 10,51 (10,76) S 16,05 (16,41), Mg 3,04 (3,1) IR (KBr): 218 Os, 163 Om, 144 Ovs, UV (THF): 25,4, 34,0, 38,8 hK.

**Patentansprüche**

1. Verfahren zur photochemischen, katalytischen Spaltung von Wasser zu u. a. Wasserstoff, dadurch gekennzeichnet, daß man als Katalysatoren Metalldithiolene vom Typ 1, Metalldithiooxamide vom Typ 2 oder Metalldithiocarbamate vom Typ 3 der allgemeinen Formeln

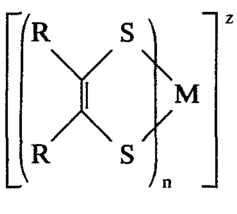

1

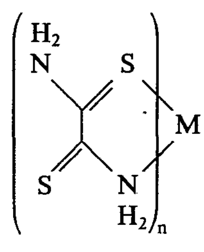

2

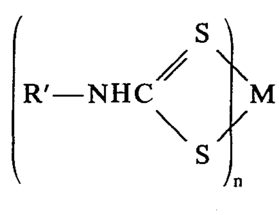

3

in denen M ein Metall der I., II., IV., V., VI., VII. und VIII. Nebengruppe des Periodensystems sowie Magnesium ist, R = Wasserstoff, eine Alkyl-, Trifluormethyl-, Aryl-, Thioalkyl-, Thioaryl-, Trithiocarbonatgruppe oder CN sein kann, R' = Wasserstoff, eine Alkyl-, Trifluormethyl-, Aryl-, Thioalkyl-, Thioaryl- oder Trithiocarbonatgruppe sein kann, n = 2 oder 3 und z = 0, −1 oder −2 sind, und in denen die Komplexliganden über Schwefelatome oder über Schwefel- und Stickstoffatome an das Metall gebunden sind, oder

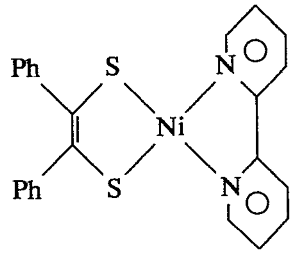

einsetzt.

2. Verfahren nach Anspruch 1, dadurch gekennzeichnet, daß der Katalysator ein Dithiolen-, Dithiooxamid- oder Dithiocabamat-Komplex von Eisen oder Nickel ist.

3. Verfahren nach Ansprüchen 1 und 2, dadurch gekennzeichnet, daß neben Wasser ein Lösungsmittel, bestehend aus einem Gemisch von Wasser und einem organischen Lösungsmittel wie z. B. Tetrahydrofuran, Dihydrofuran, bevorzugt 2,5-Dihydrofuran, oder Methylenchlorid benutzt wird.

4. Verfahren nach Ansprüchen 1—3, dadurch gekennzeichnet, daß man bei einer Temperatur von 10 bis 100° C die Reaktion durchführt.

5. Verfahren nach Ansprüchen 1—4, dadurch gekennzeichnet, daß man als Lichtquelle Licht mit einer Wellenlänge von $\lambda \geq 254$ nm benutzt.

6. Verfahren nach Anspruch 5, dadurch gekennzeichnet, daß man als Lichtquelle Sonnenlicht benutzt.

## Claims

1. A process for the photochemical catalytic splitting of water to produce hydrogen, inter alia, characterized in that metal dithiolenes of the type 1, metal dithio-oxamides of the type 2, or metal dithiocarbamates of the type 3, having the respective general formulae

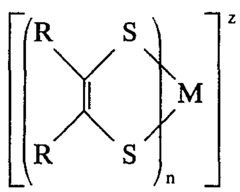

1

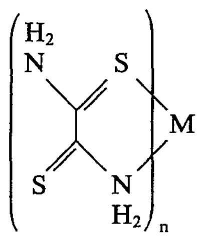

2

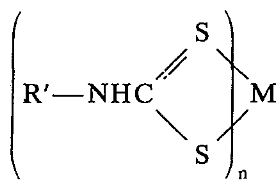

3

wherein

- M is a metal of any of the subgroups I, II, IV, V, VI, VII, and VIII of the Periodic System and magnesium,
- R may be hydrogen, any of an alkyl, trifluoromethyl, aryl, thioalkyl, thioaryl and trithiocarbonate groups or CN,
- R' may be hydrogen, or any of an alkyl, trifluoromethyl, aryl, thioalkyl, thioaryl and trithiocarbonate groups,
- n is 2 or 3 and
- z is 0, −1, or −2,

and in which the complex ligands are linked to the metal via sulfur atoms or via sulfur and nitrogen atoms, or

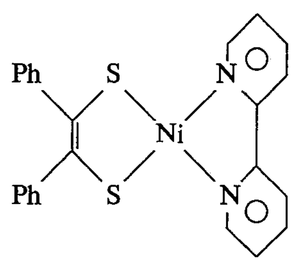

are used as the catalysts.

2. The process according to claim 1, characterized in that the catalyst is a dithiolene, dithioxamide, or dithiocarbamate complex of nickel or iron.

3. The process according to claims 1 and 2, characterized in that, in addition to water, a solvent consisting of water and an organic solvent such as, e. g., tetrahydrofuran, dihydrofuran, preferably 2,5-dihydrofuran, or methylene Chloride is used.

4. The process according to claims 1 to 3, characterized in that the reaction is carried out at a temperature of from 10° C to 100° C.

5. The process according to claims 1 to 4, characterized in that light having a wavelenght equal to or in excess of 254 nm is used as the light source.

6. The process according to claim 5, characterized in that sunlight is used as the light source.

**Revendications**

1. Procédé pur la dissociation photochimique, catalytique, de l'eau en hydrogène entre autres, caractérisé en ce que l'on met en oeuvre comme catalyseurs des dithiolènes métalliques de type 1, des dithiooxamides métalliques de type 2 ou des dithiocarbamates métalliques de type 3 répondant aux formules générales:

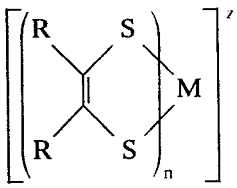
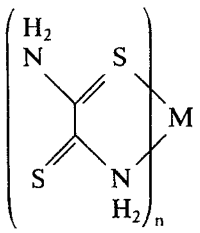
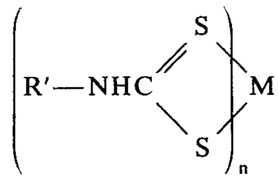

1 2 3

dans lesquelles M est un métal des sous-groupes I, II, IV, V, VI, VII et VIII de la classification périodique des éléments, ainsi que du magnésium, R peut être de l'hydrogène, un groupe alkyle, trifluorométhyle, aryle, thioalkyle, thioaryle, trithiocarbonate ou CN, R' peut être de l'hydrogène, un groupe alkyle, trifluorométhyle, aryle, thioalkyle, thioaryle ou trithiocarbonate, n est 2 ou 3 et z est 0, −1 ou −2, et dans lesquelles les liligands ou complexe sont liés au métal par l'intermédiaire d'atomes de soufre ou d'atomes de soufre et d'azote, ou:

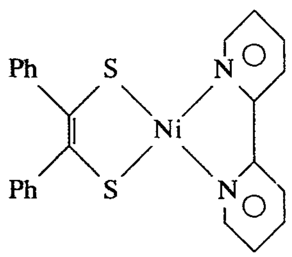

2. Procédé selon la revendication 1, caractérisé en ce que le catalyseur est un complexe de dithiolène, de dithiooxamide ou de dithiocarbamate de fer ou de nickel.

3. Procédé selon l'une des revendications 1 ou 2, caractérisé en ce qu'on utilise, outre l'eau, un solvant consistant en un mélange d'eau et d'un solvant organique tel que, par exemple, le tétrahydrofuranne, le dihydrofuranne, de préférence le 2,5-dihydrofuranne, ou le chlorure de méthylène.

4. Procédé selon l'une quelconque des revendications 1 à 3, caractérisé en ce qu'on effectue la réaction à une température de 10 à 100°C.

5. Procédé selon l'une quelconque des revendications 1 à 4, caractérisé en ce qu'on utilise comme source lumineuse de la lumière ayant une longueur d'onde $\lambda \geq 254$ nm.

6. Procédé selon la revendication 5, caractérisé en ce qu'on utilise de la lumière solaire comme source lumineuse.